# FASCICULE DE BREVET EUROPEEN

(11) **EP 1 774 641 B1**
(45) Date de publication et mention de la délivrance du brevet: **11.05.2011**
(21) Numéro de dépôt: 05789993.2
(22) Date de dépôt: 11.07.2005
(51) Int. Cl.: H02M 1/36

(54) **CONVERTISSEUR DE TENSION MINIATURE MONOLITHIQUE A TRES FAIBLE TENSION D'ENTREE**
MONOLITHISCHER MINIATURSPANNUNGSWANDLER MIT SEHR GERINGER EINGANGSSPANNUNG
MONOLITHIC MINIATURE VOLTAGE CONVERTER WITH VERY LOW INPUT VOLTAGE

(30) Priorité: 13.07.2004 FR 0451519
(43) Date de publication de la demande: 18.04.2007
(73) Titulaire: Commissariat à l'Énergie Atomique et aux Énergies Alternatives, 75015 Paris (FR)
(72) Inventeur: CONDEMINE, Cyril, F-38140 IZEAUX (FR); DURET, Denis, F-38100 GRENOBLE (FR); LHERMET, Hélène, F-38240 MEYLAN (FR)
(74) Mandataire: Poulin, Gérard
(86) Numéro de dépôt international: PCT/FR2005/050568
(87) Numéro de publication internationale: WO 2006/008423

(56) Documents cités:
- US-A1- 2004 080 304
- US-B1- 6 351 073
- "MAXIM 5V OR ADJUSTABLE, LOW-VOLTAGE, STEP-UP DC-DC CONTROLLER URL - www.maxim-ic.com" PRELIMINARY DATA SHEET - MAX608, septembre 1995 (1995-09), XP002167281
- BATES J B ET AL: "RECHARGEABLE THIN-FILM LITHIUM MICROBATTERIES" SOLID STATE TECHNOLOGY, COWAN PUBL.CORP. WASHINGTON, US, juillet 1993 (1993-07), pages 59-62,64, XP009017126 ISSN: 0038-111X

## Description

### DOMAINE TECHNIQUE ET ART ANTERIEUR

L'invention concerne le domaine des convertisseurs à faible tension d'entrée, de faible puissance.

L'invention concerne également le domaine des circuits intégrés monolithiques analogiques pour l'électronique, et plus particulièrement celui des convertisseurs de tension dits à découpage : ce sont des dispositifs qui, reliés à une source de tension variable sur une large gamme, par exemple de 0,5 V à 15 V, sont capables de générer une tension régulée fixe, par exemple de 3,3 V, pour l'alimentation de circuits électroniques.

Les applications des convertisseurs faible tension sont notamment l'alimentation électrique des objets dits communicants et des objets nomades.

Un tel dispositif est décrit dans le document US 2004/080304 et constitue l'art antérieur le plus proche de l'invention sur lequel est basé le préambule de la revendication 1.

Ces convertisseurs permettent d'obtenir des tensions convenables pour l'alimentation de circuits électroniques à partir de différentes configurations de piles ou de batteries.

Les catalogues de différents constructeurs spécialisés fournisseurs des convertisseurs de tensions décrivent de tels dispositifs.

On peut notamment citer SII-IC (voir http://www.sii-ic.com/).

Un autre fabricant est MAXIM (http://www.maxim-ic.com). La note d'application AN 710 de ce constructeur explique le fonctionnement de ce type de dispositif (voir http://www.maxim-ic.com/appnotes number/710).

Le meilleur de ces dispositifs connus ne peut convertir que des tensions à partir de 0,9 V environ.

Compte tenu du développement des dispositifs électroniques nomades et de la diminution de leur consommation, il se pose le problème de trouver d'autres sources d'énergie que les piles usuelles, comme la classique « R3 » de 1,5 V.

Un autre problème est de pouvoir utiliser ces sources jusqu'à une décharge quasi complète, et en tout cas inférieure à 0,9 V.

Il y a donc un intérêt technique et économique à disposer d'un circuit permettant d'utiliser des sources à plus faible tension que 0,9 V, typiquement jusqu'à quelques dizaines de mV.

La tension de seuil pour le fonctionnement des convertisseurs connus provient de la physique des dispositifs actifs implantés dans les circuits intégrés (transistors de type MOS).

On cherche à disposer de dispositifs à tension d'entrée plus faible.

### EXPOSÉ DE L'INVENTION

L'invention concerne un dispositif de conversion de tension continue tel que défini dans la revendication 1.

La tension de ce réservoir peut être couplée à des moyens, par exemple une architecture électronique, permettant de « démarrer » le convertisseur.

Le convertisseur peut, à son tour, après démarrage, recharger le réservoir d'énergie grâce à sa tension de sortie supérieure à la tension du réservoir d'énergie.

Ainsi il est possible d'utiliser de faibles tensions d'entrée, par exemple comprises entre 10 mV et 0,1 V ou 0,5 V pour pouvoir démarrer un convertisseur, ces faibles tensions d'entrée étant compensées par l'apport du réservoir d'énergie ou des moyens d'apport complémentaires en énergie. Le convertisseur va, à son tour, pouvoir générer une tension régulée fixe, par exemple de 3,3 V, pour l'alimentation de circuits électroniques.

L'invention propose également un circuit de veille comportant des moyens de comparaison d'une tension d'entrée avec une valeur seuil, des moyens d'activation des moyens de comparaison, et des moyens de maintien du niveau du résultat de la comparaison lorsque les moyens de comparaison sont désactivés.

Le circuit de veille a, de préférence, une consommation extrêmement faible, pour le cas où le convertisseur devrait rester en position d'attente pendant longtemps.

### BREVE DESCRIPTION DES FIGURES

- La figure 1 représente un dispositif selon l'invention,
- la figure 2 représente une réalisation de moyens de veille,
- la figure 3 représente une réalisation de moyens convertisseurs et de régulation de charge,
- les figures 4A - 4D et 5A - 5C illustrent un exemple de réalisation de l'invention,
- la figure 6 représente un exemple de micro-batterie.

### EXPOSÉ DÉTAILLÉ DE MODES DE RÉALISATION PARTICULIERS

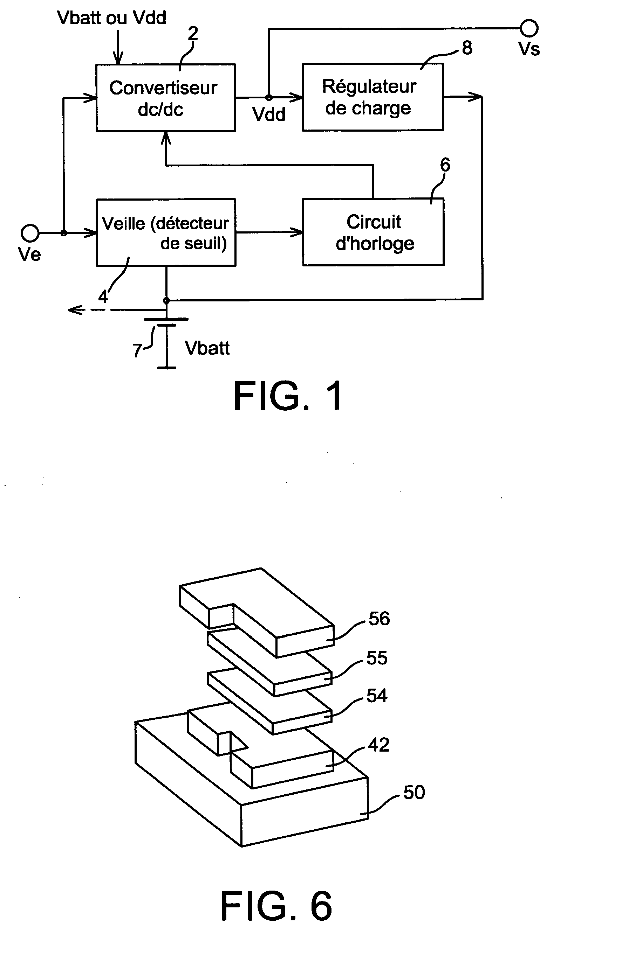

La figure 1 représente un mode de réalisation de l'invention. Le bloc 2 « convertisseur dc/dc » comprend un filtre élévateur («up-converter»), par exemple en modulation d'impulsions.

Des moyens 4 forment un circuit de veille pour une détection de seuil.

Il s'agit d'un circuit, de préférence à très basse consommation, dont le rôle est d'échantillonner, par exemple périodiquement, une tension d'entrée Ve pour détecter l'apparition d'une source utilisable par le convertisseur.

Après détection de cette source, un circuit d'horloge 6 est déclenché.

Sinon sont mis en oeuvre des moyens 7 internes d'alimentation, ou formant réservoir d'énergie, par exemple une batterie ou une micro-batterie interne.

Ces moyens 7 permettent de faire démarrer le convertisseur 2 lorsque la tension d'entrée Ve est insuffisante.

Sur la figure 1, la mention « Vbatt ou Vdd » indique que le convertisseur 2 est alimenté soit par les moyens 7 soit par Vdd, la sélection étant faite à l'aide de moyens de commutation.

Après démarrage du convertisseur, celui-ci fournit une tension Vout utilisable en externe par un circuit électronique externe.

Cette tension fournie par le convertisseur peut en outre être utilisée en interne, par exemple pour recharger les moyens 7 en vue de leur prochaine utilisation, notamment si ils ont été déchargés lors du démarrage du convertisseur 2.

Cette recharge peut être faite à l'aide des moyens 8 de régulation de charge.

D'autres améliorations peuvent être rajoutées, comme un circuit externe pour déconnecter la micro-batterie ou un circuit de recharge interne au régulateur.

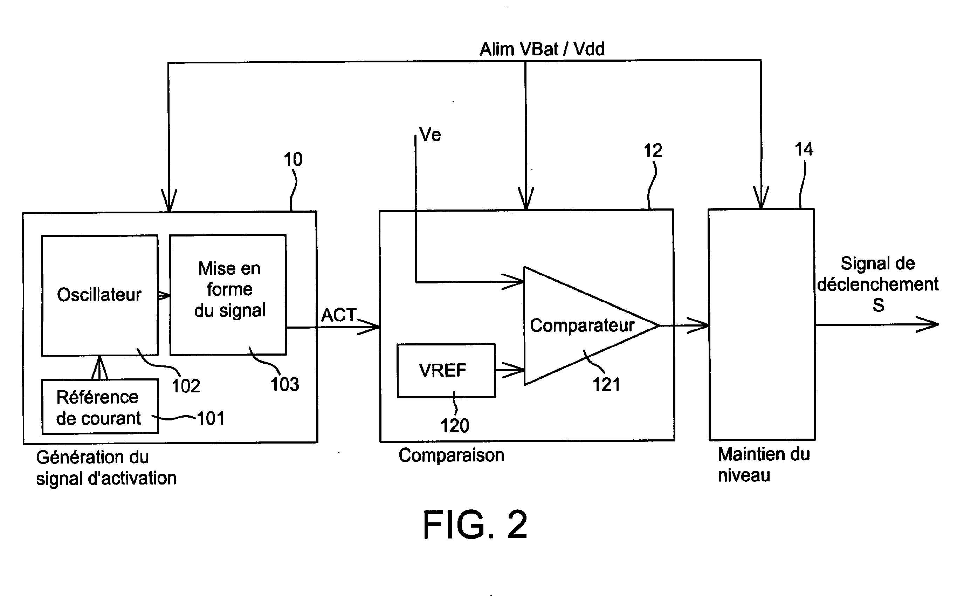

Un mode de réalisation des moyens 4 de circuit de veille est illustré sur la figure 2.

Ces moyens sont alimentés par la tension d'entrée fournie par les moyens 7 ou par la tension de sortie Vdd.

Ils permettent de détecter, par exemple par comparaison de la tension d'entrée Ve avec un seuil S1 de tension de référence, quand cette tension d'entrée est suffisamment élevée, ou supérieure au seuil S1, pour pouvoir démarrer le convertisseur 2.

Ce seuil est la tension minimale de fonctionnement (40 mV par exemple).

Si ce circuit 4 n'existait pas on pourrait se trouver dans une situation où l'on déchargerait complètement les moyens 7 (le réservoir d'énergie) et le système ne pourrait alors démarrer que pour des tensions Ve d'entrée supérieures à, par exemple, 0,8 V.

Afin de limiter la consommation du circuit de veille, la surveillance de la tension d'entrée peut être faite de façon échantillonnée ou périodique.

Comme illustré sur la figure 2, le circuit de veille comporte par exemple des moyens 12 qui permettent la comparaison, à l'aide d'un comparateur 121, de la tension d'entrée Ve avec une tension de référence VREF fournie par des moyens 120 générant une telle tension de référence. Cette comparaison peut être activée périodiquement par un signal d'activation ACT.

Si la tension d'entrée Ve est supérieure à la valeur de seuil de tension, les moyens 4 produisent un signal S de déclenchement du convertisseur 2, par exemple par le biais de la commande de l'horloge 6 (figure 1).

Le convertisseur 2 est alors alimenté directement par la réserve de tension 7.

Les moyens 4 n'autorisent le réservoir 7 à délivrer sa tension que lorsque la tension d'entrée Ve est supérieure à cette valeur seuil. Le franchissement de la valeur seuil indique un accroissement de la tension d'entrée, critère selon lequel on peut raisonnablement déclencher l'alimentation du convertisseur par les moyens 7.

Si la tension d'entrée venait de nouveau à chuter sous le seuil S1, les moyens 7 seraient de nouveau déconnectés pour ne plus alimenter le convertisseur.

Ils seront également déconnectés si la tension Vdd générée par le convertisseur 2 en cours de fonctionnement dépasse une autre valeur de seuil, par exemple environ 1 Volt.

Les moyens 10 génèrent un signal d'activation ACT.

Ces moyens 10 comportent par exemple des moyens 101 générant une référence de courant, des moyens 102 oscillateurs et des moyens 103 de mise en forme du signal ACT.

Des moyens 14 permettent le maintien du niveau du résultat de la comparaison lorsque les moyens 12 sont désactivés, notamment entre deux signaux d'activation ACT. Ces moyens comprennent par exemple une bascule numérique par exemple une bascule D.

Les moyens 10 et 14 peuvent fonctionner en permanence ; ils sont alors conçus de préférence de manière à consommer le moins possible.

Un courant de l'ordre de quelques dizaines de nano-ampères permet de générer le signal d'activation ACT, sous 2V, et de maintenir le niveau de consommation de courant (dans les moyens 14) à environ quelques nano-ampères, ce qui est compatible avec l'utilisation d'une micro-batterie 7 d'alimentation en tant que réservoir d'énergie.

La consommation autorisée pour les moyens 12 de comparaison est d'autant plus faible que l'activation de ce bloc est fréquente.

Par exemple, des moyens 12 de comparaison peuvent consommer 2µA et être activés pendant une seconde toutes les heures.

Sur cette figure 2, la mention « Alim Vbatt/ Vdd » indique que les différents éléments du système sont alimentés soit par les moyens 7 soit par Vdd, la sélection étant faite à l'aide de moyens de commutation.

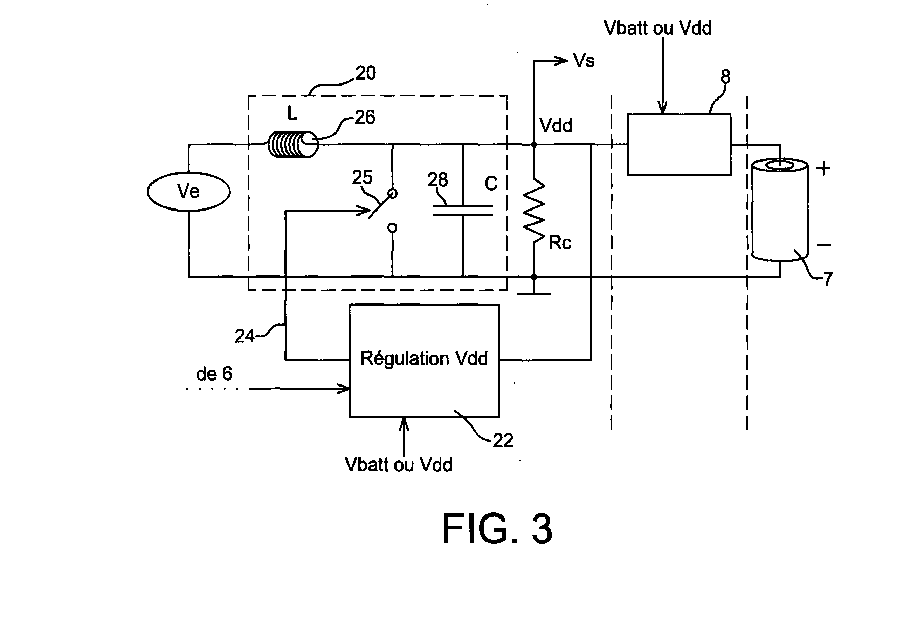

La figure 3 représente un mode de réalisation des moyens 2 convertisseur et des moyens 8 de charge.

Les moyens 2 convertisseurs peuvent comporter des moyens 20 formant un filtre élévateur avec des moyens 22 de régulation de Vdd (par exemple des moyens de commande par modulations d'impulsions ou de contrôle de densité d'impulsions associées à un contrôle du type PID « Proportional Integral Dérivé »).

Les moyens 22 peuvent envoyer, via les moyens 24 un signal à un interrupteur 25, signal qui va fermer ou ouvrir cet interrupteur.

Les moyens 20 comportent en outre une inductance 26 L et une capacité 28 C, ces deux composants pouvant être externes.

Le compostant Rc représente un circuit extérieur à alimenter avec la tension Vdd de sortie des moyens 20 convertisseurs.

Ces différents moyens de la figure 3 fonctionnent comme expliqué dans l'ouvrage « Alimentation à découpage », IUT, BTS, Ecoles d'Ingénieurs, Cours et Exercices Corrigés, 2ème édition,, M.Girard, H.Angelis et M.Girard, Dunod Editeur, Collection Science Sup., paru le 18/11/03.

Quand le signal Ve est supérieur au seuil S₁, un signal d'horloge, formé par des moyens 6 de circuit d'horloge (figure 1) est fourni aux moyens 22 de régulation sous la commande des moyens 4, comme expliqué ci-dessus. Ce signal d'horloge permet de déclencher les moyens 22, et donc l'alimentation du convertisseur soit avec la tension extérieure Ve soit avec la tension des moyens 7.

Le régulateur 22 permet d'atteindre la tension désirée. Il peut aussi avantageusement, lorsque Vdd atteint un seuil S₂ prédéfini, déconnecter les moyens 7, le convertisseur DC/DC étant alors alimenté par V_{DD}.

Les moyens 8 sont des moyens de charge, en courant, des moyens 7, par exemple une micro-batterie, pendant le fonctionnement du dispositif.

Les moyens 8 sont adaptés au courant maximum disponible en sortie. En effet, comme tout circuit électronique, ils sont conçus pour fonctionner dans des conditions pré-établies : on dit donc qu'ils sont « adaptés ». Ils comprennent par exemple un miroir de courant.

Sur cette figure 3, la mention « Vbatt ou Vdd » indique que les moyens 8, 22 sont alimentés soit par les moyens 7 soit par Vdd, la sélection étant faite à l'aide de moyens de commutation.

Un dispositif tel que celui de la figure 1 met en oeuvre des moyens 7 de réserve d'énergie, en vue du démarrage des moyens convertisseurs si la tension d'entrée Ve est insuffisante.

Ces moyens 7 permettent donc de produire une tension de démarrage de ce convertisseur.

Selon un mode de réalisation ils peuvent ensuite être rechargés par ce dernier, dont la tension de sortie Vdd est plus élevée que sa tension d'entrée.

Ces moyens 7 sont par exemple une batterie, ou une micro-batterie, comme dans l'exemple illustré ci-dessus en liaison avec la figure 3.

Une micro-batterie peut être réalisée en utilisant des procédés comparables à ceux présentés par exemple sur http://www.cea-technologies.com/energie/67-201. html. De tels procédés permettent de réaliser des batteries qui fournissent une tension de 2 à 2,5 V.

Une telle micro-batterie est par exemple représentée sur la figure 6.

Elle comporte un substrat 50 en silicium, un collecteur 52 de courant en platine, une électrode 54 en sulfure de titane, un électrolyte 55 en LIPON (« oxynitrure de phosphate et de lithium ») et une électrode 56 en lithium métallique. Les couches sont déposées par technique PVD sur le substrat et totalisent environ 10 micromètres d'épaisseur. En surface, la micro-batterie fait environ quelques mm2.

Dans le cas où un dispositif selon l'invention est réalisé sous forme de circuit intégré, la batterie peut faire partie intégrante du procédé de fabrication du circuit intégré ; elle est alors invisible pour l'utilisateur.

Les moyens 7 peuvent, par construction (par exemple par choix des matériaux de l'architecture), être réalisés de manière à avoir un taux d'autodécharge négligeable.

Dans ce cas, ils peuvent être chargés dès construction, et attendre l'activation du circuit 4 de veille, pour le cas où une tension d'entrée Ve serait insuffisante.

Ce dernier déclenche le fonctionnement du convertisseur 2 si, et seulement si, il existe une tension Ve utilisable à son entrée, ou bien fait appel au réservoir d'énergie 7 pour démarrer le convertisseur.

Le réservoir 7 d'énergie est alors chargé pour démarrer le convertisseur, si la tension d'entrée Ve est insuffisante, par exemple compte tenu de la comparaison effectuée par les moyens 12 décrits ci-dessus.

Par ailleurs, les moyens 7 peuvent être chargés au moment où le circuit est mis en place, par exemple sur une carte électronique, et à tout moment opportun, soit en faisant démarrer le convertisseur 2 avec une tension d'entrée Ve suffisante pour dépasser le seuil, et donc assurer la recharge des moyens 7 par la tension de sortie dudit convertisseur, soit par une entrée de recharge spécifique. Cette opération est d'autant plus limitée dans le temps que la batterie peut être rechargée rapidement.

Enfin, l'exemple d'une batterie a été donné, mais la tension de démarrage des moyens 2 peut être délivrée par autre chose qu'une batterie, par exemple par un convertisseur mécanique (par exemple par un ressort comprimé).

Le réservoir d'énergie est par exemple une batterie ou une micro-batterie, et est de préférence rechargeable. Le dispositif peut comporter, comme expliqué ci-dessus, un système de recharge alimenté par la tension de sortie du convertisseur. La batterie ou la micro-batterie est de préférence intégrée.

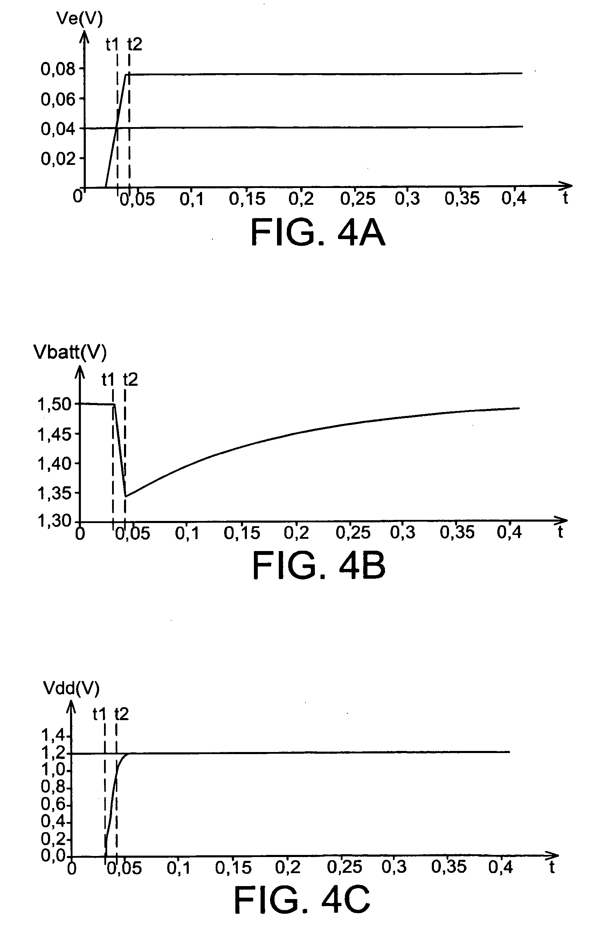

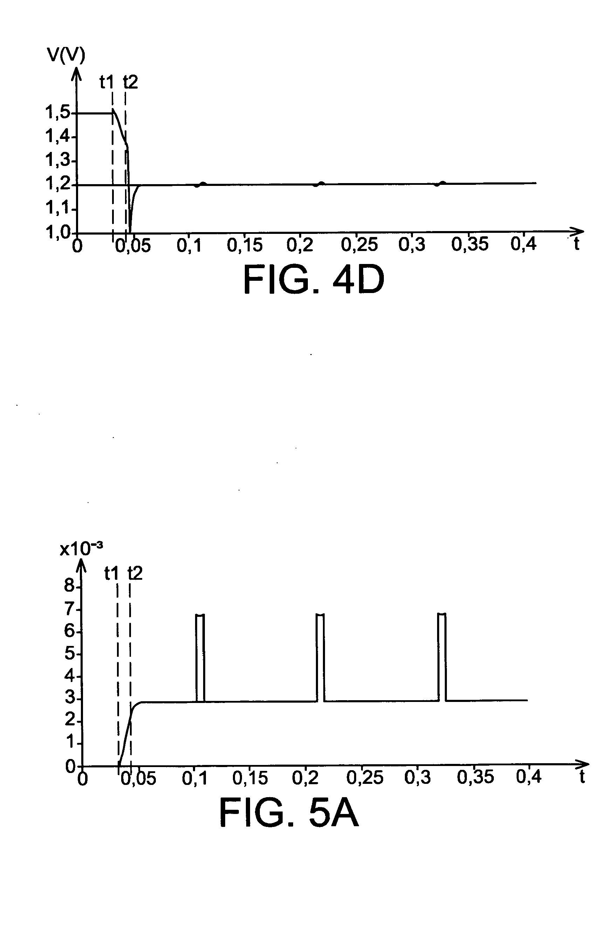

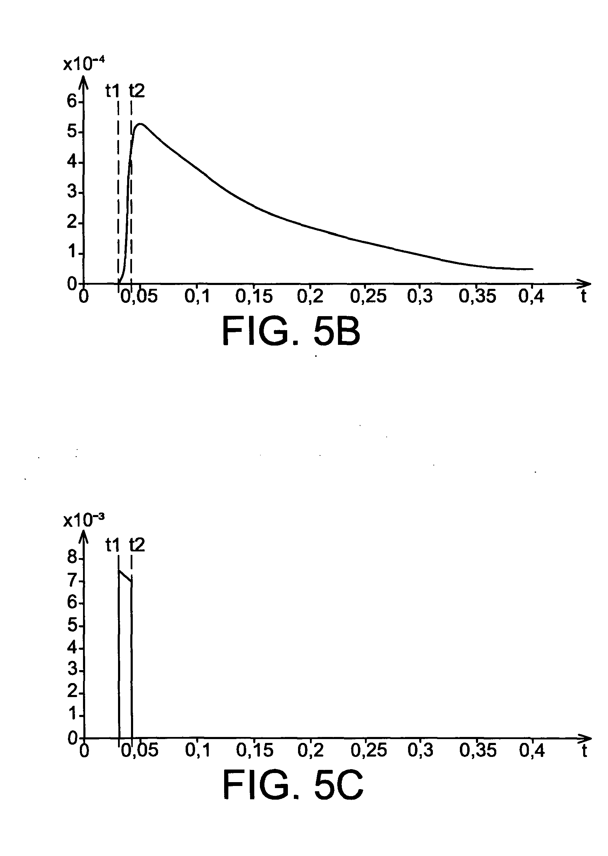

L'exemple suivant, illustré à l'aide des figures 4A-4D et 5A-5C, présente un système tel qu'il vient d'être décrit, avec un seuil S1 de détection en entrée de 40 mV et une tension Vdd désirée de 1,2 V. La tension nominale des moyens 7 (ici : une micro-batterie) est de 1,5 V.

Les figures 4A-4D représentent l'évolution temporelle des tensions, respectivement, de la tension d'entrée Ve, de la tension aux bornes des moyens 7 d'alimentation, de la tension d'alimentation générée vers l'extérieur, de la tension d'alimentation des moyens 4 et des moyens 2 (moyens de veille et de convertisseur).

Les figures 5A-5C représentent l'évolution temporelle des courants, respectivement, du courant consommé par le circuit extérieur Rc, du courant de charge de la batterie (courant entrant dans la batterie), et du courant consommé sur la batterie (courant sortant de la batterie).
Partie 1 (entre 0 et t1) : Tant que l'entrée présente une puissance inférieure à un seuil fixé et une tension inférieure à un seuil S1 fixé (ici le seuil est de 40 mV), seule une partie des moyens 4 de veille fonctionne (il y a génération du signal d'activation ACT et maintien du niveau de sortie, le comparateur fonctionnant de manière périodique). La micro-batterie 7 alimente le circuit de veille uniquement et la consommation est minimale.
Partie 2 (entre t1 et t2) : Lorsque la tension d'entrée dépasse le seuil fixé (40 mV), les moyens 2 de convertisseur DC-DC se mettent en route. Jusqu'à ce que la tension de sortie produite par les moyens 2 soit stable et supérieure à S₂, par exemple, 1 V, la micro-batterie 7 continue d'alimenter l'ensemble du circuit. La consommation est importante, mais pendant un temps réduit. Autrement dit, de t1 à t2 le convertisseur DC/DC va « pomper » sur la batterie, dont la tension va chuter (figure 4B), tandis que la tension d'alimentation Vdd générée vers l'extérieur (figure 4C) croît c'est-à-dire que la tension d'alimentation du circuit 4 de veille et du convertisseur chute (figure 4D), Vdd pouvant progressivement prendre le relais.
Partie 3 (t>t2) : la tension d'alimentation Vs (= Vdd) générée (1,2 V) permet d'alimenter les moyens 2 formant convertisseur DC-DC, le circuit extérieur et de recharger la micro-batterie 7 (figure 4B).

L'invention propose donc un nouveau dispositif, par exemple de type circuit intégré monolithique, permettant de convertir la tension de sources d'énergie vers une tension utilisable par des circuits électroniques, capable de fonctionner avec des tensions d'entrée extrêmement basses, jusqu'à quelques dizaines de mV.

De la sorte, la plupart des sources d'énergie utilisées actuellement peuvent être exploitées jusqu'à leur décharge quasi complète, ce qui amène donc des économies.

D'autre part, l'invention permet l'utilisation de nouvelles sources d'énergie, non employées jusqu'à présent à cause de leur trop faible tension.

Le dispositif selon l'invention est compatible avec l'industrie des circuits intégrés ; il peut être intégré dans le processus de fabrication : le concepteur de circuits électroniques n'a pas à se préoccuper de l'assemblage de nouveaux circuits plus ou moins ésotériques ou difficiles à mettre en oeuvre.

Par ailleurs, l'invention n'accroît pas le volume usuellement dévolu à la fonction de la conversion de tension.

Comme il a été mentionné plus haut, l'invention permet de procurer aux concepteurs, et en particulier aux électroniciens, un convertisseur continu/continu qui peut gérer des tensions d'entrée extrêmement faibles, jusqu'à quelques dizaines de mV.

Enfin, le mode de réalisation décrit permet d'obtenir un circuit intégré monolithique, avec une architecture et des circuits qui gèrent la charge et la mise à disposition d'une micro-batterie intégrée, laquelle fournit une tension suffisante aux transistors d'un convertisseur pour fonctionner.

## Revendications

1. Dispositif de conversion de tension continue comprenant des moyens (2) formant un convertisseur DC/DC, des moyens (7) formant réservoir d'énergie aptes à alimenter des moyens (4) **caractérisé en ce que** les moyens formant réservoir d'énergie sont détecteurs de seuil pour fournir un signal de déclenchement pour démarrer le convertisseur, les moyens détecteurs de seuil échantillonnant un signal d'entrée (Ve) et détectant l'apparition d'une tension du signal d'entrée utilisable par le convertisseur, les moyens détecteurs de seuil autorisant la fourniture d'un signal de démarrage au convertisseur lorsque le signal d'entrée est supérieur à un seuil, le signal d'entrée étant délivré par un source d'énergie différente des moyens formant réservoir d'énergie.

2. Dispositif selon la revendication 1, les moyens (4) comportant des moyens (12) pour comparer la tension d'entrée (Ve) avec une tension de référence (VREF).

3. Dispositif selon la revendication 1 ou 2, les moyens (4) détecteurs de seuil comportant des moyens (10) pour échantillonner la tension d'entrée de façon périodique.

4. Dispositif selon l'une des revendications 1 à 3, un circuit d'horloge (6), étant déclenché lorsqu'une tension d'entrée est supérieure à une valeur seuil, ledit circuit envoyant une impulsion pour faire démarrer le convertisseur (2).

5. Dispositif selon l'une des revendications 1 à 4, comportant en outre des moyens (4, 8) pour recharger les moyens formant réservoir d'énergie lorsque les moyens formant convertisseur fonctionnent.

6. Dispositif selon l'une des revendications 1 à 5, comportant des moyens (22) de régulation par modulation d'impulsion associée à un contrôle de type PID.

7. Dispositif selon l'une des revendications 1 à 6, comportant en outre des moyens pour déconnecter les moyens formant réservoir d'énergie, de sorte qu'ils n'alimentent plus le convertisseur, lorsque la tension générée par le convertisseur dépasse une valeur seuil.

8. Dispositif selon l'une des revendications 1 à 7, comportant des moyens (20) formant filtre élévateur et des moyens (22) de régulation.

9. Dispositif selon l'une des revendications 1 à 8, les moyens (7) formant réservoir d'énergie comportant une micro-batterie.

10. Dispositif selon l'une des revendications 1 à 9, les moyens (7) formant réservoir d'énergie comportant un convertisseur mécanique.

## Claims

1. A DC voltage conversion device comprising a DC/DC converter (2) to convert an input signal (Ve) into an output signal, means forming an energy reservoir (7) **characterized in that** means forming an energy reservoir can power a threshold detecting means (4) in order to provide a triggering signal to start the converter (2), a threshold detecting means (4) for sampling the input signal (Ve) and for detecting occurrence of a voltage of the input signal (Ve) that may be used by the converter, the threshold detecting means allowing a triggering signal to be delivered to the converter when the input signal is larger than a threshold, the input signal being delivered by a power source different from the energy reservoir.

2. The device according to claim 1, said means (4) comprising means (12) for comparing the input voltage (Ve) with a reference voltage (VREF).

3. The device according to claim 1 or 2, the threshold detecting means (4) comprising means (10) for sampling the input voltage periodically.

4. The device according to any of claims 1 to 3, a clock circuit (6) being triggered when an input voltage is larger than a threshold value, said circuit sending a pulse to start the converter (2).

5. The device according to any of claims 1 to 4, further comprising means (4, 8) for recharging the means forming an energy reservoir when the converter forming means operate.

6. The device according to any of claims 1 to 5, comprising control means (22) by pulse modulation, associated with a proportional plus integral plus derivative type control.

7. The device according to any of claims 1 to 6, further comprising means for disconnecting the means forming an energy reservoir, so that they no longer power the converter, when the voltage generated by the converter exceeds a threshold value.

8. The device according to any of claims 1 to 7, comprising means (20) forming an up-converter filter and control means (22).

9. The device according to any of claims 1 to 8, said means (7) forming an energy reservoir comprising a micro-battery.

10. The device according to any of claims 1 to 9, the means (7) forming an energy reservoir comprising a mechanical converter.

## Patentansprüche

1. Vorrichtung zur Gleichspannungsumwandlung, umfassend Mittel (2), die einen Gleichspannungsumwandler bilden, und Mittel (7), die einen Energiespeicher bilden, **dadurch gekennzeichnet, dass** die Mittel, die einen Energiespeicher bilden, Schwellendetektormittel (4) zur Lieferung eines Auslösesignals zum Starten des Wandlers versorgen können, wobei die Schwellendetektormittel eines Eingangssignals (Ve) abtastet und das Auftreten einer Spannung des Eingangssignals, die für den Wandler verwendbar ist, detektieren, die Schwellendetektormittel das Liefern eines Auslösesignals an den Wandler, sobald das Eingangssignal höher als eine Schwelle ist, veranlassen, wobei das Eingangssignal von einer anderen Energiequelle als den Mitteln, die den Energiespeicher bilden, geliefert wird.

2. Vorrichtung nach Anspruch 1, wobei die Mittel (4) Mittel (12) zum Vergleichen der Eingangsspannung (Ve) mit einer Bezugsspannung (VREF) aufweisen.

3. Vorrichtung nach Anspruch 1 oder 2, wobei die Schwellendetektormittel (4) Mittel (10) zum abtasten der Eingangsspannung in periodischer Weise aufweisen.

4. Vorrichtung nach einem der Ansprüche 1 bis 3 mit einer Zeitschaltung (6), die ausgelöst wird, sobald eine Eingangsspannung höher als ein Schwellenwert ist, wobei die Schaltung einen Impuls zum Starten des Wandlers (2) sendet.

5. Vorrichtung nach einem der Ansprüche 1 bis 4, ferner mit Mitteln (4, 8), um die Mittel, die einen Energiespeicher bilden, aufzuladen, sobald die Mittel, die einen Wandler bilden, arbeiten.

6. Vorrichtung nach einem der Ansprüche 1 bis 5, mit Mitteln (22) zur Regelung durch Impulsmodulation in Verbindung mit einer Kontrolle des Typs proportionales plus integrales plus Ableitung.

7. Vorrichtung nach einem der Ansprüche 1 bis 6, ferner mit Mitteln zur Abtrennung der Mittel, die einen Energiespeicher bilden, derart, dass sie den Wandler nicht mehr versorgen, sobald die durch den Wandler erzeugte Spannung einen Schwellenwert übersteigt.

8. Vorrichtung nach einem der Ansprüche 1 bis 7, mit Mitteln (20), die einen Aufwärtsfilter bzw. einen Aufwärtswandler bilden, und Mitteln (22) zur Regelung.

9. Vorrichtung nach einem der Ansprüche 1 bis 8, wobei die Mittel (7), die einen Energiespeicher bilden, eine Mikrobatterie aufweisen.

10. Vorrichtung nach einem der Ansprüche 1 bis 9, wobei die Mittel (7), die einen Energiespeicher bilden, einen mechanischen Wandler aufweisen.
